(19) Europäisches Patentamt
European Patent Office
Office européen des brevets

(11) Veröffentlichungsnummer: **0 003 553**
**B1**

(12) # EUROPÄISCHE PATENTSCHRIFT

(21) Anmeldenummer: **79100279.3**

(22) Anmeldetag: **31.01.79**

(51) Int. Cl.³: **C 07 F 9/20**

(54) **Verfahren zur Herstellung von O,S-Dialkylthiophosphorsäurechloriden**

(30) Priorität: **04.02.78 DE 2804775**

(43) Veröffentlichungstag der Anmeldung:
**22.08.79 Patentblatt 79/17**

(45) Bekanntmachung des Hinweises auf die Patenterteilung:
**29.10.80 Patentblatt 80/22**

(84) Benannte Vertragsstaaten:
**BE CH DE FR GB IT**

(56) Entgegenhaltungen:
**DE - B - 2 036 048**
**DE - A - 2 217 650**
**Journal of the Chemical Society, 1961, Seiten 3067—3070**

(73) Patentinhaber: **BASF Aktiengesellschaft**
**Carl-Bosch-Strasse 38**
**D - 6700 Ludwigshafen (DE)**

(72) Erfinder: **Loeffler, Hans-Peter, Dr.**
**Defreggerstrasse 14**
**D - 6700 Ludwigshafen (DE)**
**Kiehs, Karl, Dr.**
**Sudetenstrasse 22**
**D - 6840 Lampertheim (DE)**

**EP 0 003 553 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Verfahren zur Herstellung von O,S-Dialkylthiophosphorsäurechloriden

Die Erfindung betrifft ein Verfahren zur Herstellung von O,S-Dialkylthiophosphorsäurechloriden durch Umsetzung von Phosgen mit Salzen von O,S-Dialkyl-dithiophosphorsäureestern.

Es sind mehrere Verfahren zur Herstellung von O,S-Dialkylthiophosphorsäurechloriden bekannt. So werden z.B. O,S-Dialkylthiophosphorsäurechloride durch Umsetzung von Dialkylchlorphosphit mit einem Alkylsulfenylchlorid erhalten (DE—AS 22 17 650). Dabei ist die Reinherstellung der als Ausgangsstoffe eingesetzten Dialkylchlorphosphite umständlich, die erzielte Ausbeute an Dialkylchlorphosphit ist gering (Houben-Weyl, Methoden der org. Chemie, Bd. 12/2, S. 45, Georg-Thieme-Verlag, Stuttgart 1964; J. Org. Chem. *30,* 3217 ff (1965); Z. anorg. und allgem. Chem. *307,* 113 ff (1961)).

Außerdem können O,S-Dialkylthiophosphorsäurechloride durch Einwirken von Phosphorpentachlorid auf O,S-Dialkylphosphorsäuren hergestellt werden (DE—PS 10 92 464). Von Nachteil ist bei diesem Verfahren, daß auch hier die als Ausgangsverbindungen eingesetzten Säuren schwierig herzustellen sind (Houben-Weyl, Methoden der org. Chem., Bd. 12/2, S. 605, Georg-Thieme-Verlag Stuttgart, 1964; J. Prakt. Chem. *8,* 97 ff (1959)).

Weiterhin ist bekannt, daß durch Phosgenierung von O,O-disubstituierten Dithiophosphorsäuren in Anwesenheit katalytischer Mengen eines sekundären Amids Phosphorylchloride erhalten werden (DE—PS 20 36 048). Setzt man dagegen Salze dieser Säuren ein, so entstehen Chlorcarbonylverbindungen der Formel

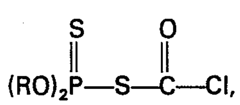

die zum Teil unübersichtliche Folgereaktionen eingehen (J. Chem. Soc. *1961,* 3067 ff).

Es wurde nun ein Verfahren gefunden, nach dem man O,S-Dialkylthiophosphorsäurechloride der Formel I

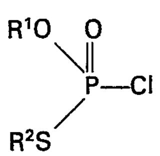 I

in der $R^1$ und $R^2$ gleiche oder verschiedene unverzweigte oder verzweigte Alkylgruppen, mit 1 bis 4 Kohlenstoffatomen, die durch Methoxy, Äthoxy, Methylthio oder Äthylthio substituiert sein können, bedeuten, durch Umsetzung von Phosgen mit Salzen von O,S-Dialkyl-dithiophosphorsäureestern der Formel II

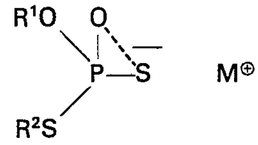 II

in der $R^1$ und $R^2$ die oben genannte Bedeutung haben M⊕ für ein Alkalimetallion oder ein gegebenenfalls durch Alkylreste mit 1 bis 3 Kohlenstoffatomen substituiertes Ammoniumion steht, in Anwesenheit eines unter den Reaktionsbedingungen inerten, organischen Lösungs- oder Verdünnungsmittels erhält.

Der Verbingdungen der Formel I sind wertvolle Ausgangsverbindungen für die Synthese insektizider Phosphorsäurederivate.

Daß die Umsetzung der leicht zugänglichen Salze der O,S-Dialkyldithiophosphorsäureester mit Phosgen in glatter Reaktion zu O,S-Dialkylthiophosphorsäurechloriden führt, war nicht zu erwarten, insbesondere da bekannt ist, daß die Salze der entsprechenden O,O-Dialkyl-dithiophosphorsäureester mit Phosgen Chlorcarbonylverbindungen ergeben. Nach dem erfindungsgemäßen Verfahren können O,S-Dialkylthiophosphorsäurechloride der Formel I hergestellt werden, in der $R^1$ und $R^2$ für unverzweigte oder verzweigte Alkylreste mit 1 bis 4 Kohlenstoffatomen, wie Methyl, Äthyl, n-Propyl, i-Propyl oder Butylreste, stehen. Diese Alkylreste können durch Methoxy, Äthoxy, Methylthio oder Äthylthio substituiert sein, so daß $R^1$ und $R^2$ beispielsweise für Methoxymethyl, β-Methoxyäthyl, β-Äthoxyäthyl, β-Methylthioäthyl, β-Äthylthioäthyl oder Methylthiomethyl stehen können. Die Reste $R^1$ und $R^2$ können gleich oder verschieden sein.

Als Kationen $M^{\oplus}$ der Salze der Formel II kommen Alkalimetallionen, beispielsweise Natrium- oder Kaliumionen, das Ammoniumion oder durch Alkylgruppen mit 1 bis 3 Kohlenstoffatomen substituierte Ammoniumionen, wie Methylammonium, Diäthylammonium, Dimethylammonium, Trimethylammonium, Triäthylammonium, Dipropylammonium, in Betracht.

Die Umsetzung wird in Anwesenheit eines unter den Reaktionsbedingungen inerten organischen Lösungs- oder Verdünnungsmittels durchgeführt. Geeignet sind beispielsweise halogenierte Kohlenwasserstoffe, wie Dichlormethan, Tetrachlorkohlenstoff, 1,2-Dichloräthan; Kohlenwasserstoffe, wie Toluol, Benzol, Ligroin; Äther, wie Dioxan.

Die Umsetzung kann gegebenenfalls in Anwesenheit eines phosgenaktivierenden Katalysators durchgeführt werden. Übliche Katalysatoren dieser Art sind Säureamide wie Dimethylformamid, N-Methylpyrrolidon, Dimethylacetamid, die zweckmäßigerweise in Mengen von 0,1 bis 10 Mol-%, bezogen auf Salze der

Formel II, eingesetzt werden.

Phosgen und Salze der Formel II können in äquimolarem Verhältnis umgesetzt werden. Zweckmäßigerweise wird die Reaktion jedoch so durchgeführt, daß Phosgen während der Umsetzung im Überschuß vorhanden ist. Um das zu erreichen, wird entweder die gesamte Menge Phosgen, gelöst in dem als Reaktionsmedium gewählten Lösungsmittel, vorgelegt, oder es wird nur ein Anteil der erforderlichen Phosgenmenge vorgelegt, und die restliche Phosgenmenge wird dann während der Zugabe des Salzes der O,S-Dialkyl-dithiophosphorester eingegast. Es können Mengen von 1 bis 100 Mol, vorzugsweise 1 bis 20 Mol, bezogen auf 1 Mol Salz der Formel II, verwendet werden. Nicht umgesetztes Phosgen kann durch Einleiten eines Inertgases, wie Stickstoff, nach der Umsetzung aus dem Reaktionsgemische ausgetragen werden.

Die Reaktionstemperatur kann in einem weiten Bereich variiert werden; im allgemeinen arbeitet man bei einer Temperatur im Bereich von —40 bis +60°C.

Es ist auch möglich, das Phosphorestersalz bei relativ tiefer Temperatur, beispielsweise —20 bis 0°C, zu der Lösung des Phosgens zuzutropfen und danach zum Vervollständigen der Reaktion bei etwas höherer Temperatur nachzurühren. Nach dem Ende der Reaktion können zuerst die flüchtigen Nebenprodukte, beispielsweise N,N-Dimethylcarbamoylchlorid, und das Lösungsmittel abdestilliert und anschließend das Endprodukt destilliert werden. Man kann aber auch beispielsweise das rohe Reaktionsgemisch mit Eiswasser hydrolysieren, die das Produkt enthaltende organische Phase abtrennen, trocknen und destillieren.

Bei der Umsetzung als Nebenkomponente anfallendes Kohlenoxidsulfid kann abgetrennt und für andere Umsetzungen verwendet werden. Das bei Verwendung der Dimethylammoniumsalze der Formel II entstehende Dimethylcarbamoylchlorid kann durch Destillation abgetrennt werden.

Nach einer zweckmäßigen Ausführungsform des erfindungsgemäßen Verfahrens legt man die gesamte Phosgenmenge oder nur einen Anteil, gelöst im Lösungsmittel, dem gegebenenfalls ein Katalysator zugesetzt wurde, vor. Anschließend tropft man unter Rühren das O,S-Dialkyl-dithiophosphorsäureestersalz zu, wobei, falls nicht die gesamte Phosgenmenge vorgelegt wurde, Phosgen eingeleitet wird. Dann rührt man das Reaktionsgemische 10 bis 15 Stunden bei Raumtemperatur, entfernt noch vorhandenes Phosgen durch Einleiten von Stickstoff aus dem Reaktionsgemisch, wäscht mit Eiswasser und arbeitet die organische Phase in üblicher Weise auf.

Die folgenden Beispiele erläutern das erfindungsgemäße Verfahren.

Beispiel 1

Zu 330 ml Methylenchlorid, 2 ml Dimethylformamid und 90 g Phosgen tropft man unter Rühren in 2 Stunden bei 0°C 122,5 g N,N - Dimethylammonium - O - äthyl - S - n - propyldithiophosphat unter gleichzeitigem Einrühren von 110 g Phosgen. Man rührt 5 Stunden bei 0°C und 12 Stunden bei 20°C nach. Das noch vorhandene Phosgen wird durch Einleiten von Stickstoff ausgegast. Nach mehrmaligem Waschen mit Eiswasser wird die organische Phase mit Calciumchlorid getrocknet, eingeengt und destilliert. Man erhält durch Destillation 58 g O - Äthyl - S - n - propyl - thiophosphorylchlorid vom Siedepunkt 77°C/0,5 mbar.

Beispiel 2

Zu 1250 ml Methylenchlorid und 250 g Phosgen tropft man unter Rühren bei 20°C in 2 Studen 122,5 g N,N - Dimethylammonium - O - äthyl - S - n - propyldithiophosphat. Man läßt 12 Stunden bei 20°C stehen, erhitzt 2 Stunden auf 40°C und entfernt noch vorhandenes Phosgen durch Einleiten von Stickstoff. Man arbeitet, wie im Beispiel 1 beschrieben, auf und erhält 80 g O - Äthyl - S - n - propyl - thiophosphorylchlorid vom Siedepunkt 69°C/0,4 mbar.

Beispiel 3

23,8 g Kalium - O - äthyl - S - n - propyldithiophosphat werden in 4 Stunden bei 20—30°C unter Rühren zu 50 g Phosgen in 200 ml 1,4-Dioxan zugegeben. Man rührt 12 Stunden bei 20°C nach, versetzt mit 500 ml Toluol, wäscht mit Eiswasser, trocknet und entfernt das Lösungsmittel. Man erhält 16,5 g eines schwach gelben Öls, das den Infrarotspektren nach mit O - Äthyl - S - n - propylthiophosphorylchlorid identisch ist.

Beispiel 4

In einer Stunde werden 64,3 g N,N - Dimethylammonium - O - äthyl - S - sec. - butyldithiophosphat bei 0°C zu 45 g Phosgen und 1 ml Dimethylformamid in 165 ml Methylenchlorid eingetropft. Gleichzeitig werden unter Rühren weitere 80 g Phosgen eingegast. Man arbeitet, wie bei Beispiel 1 beschrieben, auf und erhält O - Äthyl - S - sec. - butylthiophosphorylchlorid vom Siedepunkt 68°C/0,4 mbar.

Beispiel 5

64,3 g N,N - Dimethylammonium - O - äthyl - S - isobutyldithiophosphat werden in 2 Stunden bei 0°C unter Rühren zu der Mischung von 165 ml Methylenchlorid, 1 ml Dimethylformamid und 45 g Phosgen eingetropft. Gleichzeitig werden weitere 75 g Phosgen in die Mischung eingeleitet. Man arbeitet, wie in Beispiel 1 beschrieben, auf und erhält 30 g O - Äthyl - S - isobutylthiophosphorylchlorid vom Siedepunkt 78—79°C/0,67 mbar.

Beispiel 6

Zu 350 ml Methylenchlorid und 90 g Phosgen tropft man unter Rühren in 2 Stunden bei 0°C 122,5 g N,N - Dimethylammonium - O - äthyl - S - n - propyldithiophosphat unter gleichzeitigem Einleiten von 100 g Phosgen. Man rührt 5 Stunden bei 0°C und 12 Stunden bei 20°C nach. Unter vermindertem Druck werden dann das Lösungsmittel und leicht flüchtige Substanzen, wie Phosgen, abgezogen. Aus dem verbleibenden Rückstand erhält man durch Destillation einen Vorlauf von 5 g N,N-Dimethylcarbamoylchlorid und als Hauptfraktion 52 g O - Äthyl - S - n - propylthiophosphorylchlorid vom Siedepunkt 74°C/0,4 mbar.

**Patentansprüche**

1. Verfahren zur Herstellung von O,S-Dialkylthiophosphorsäurechloriden der Formel I

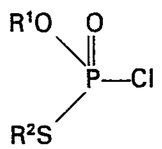 I

in der $R^1$ und $R^2$ gleiche oder verschiedene unverzweigte oder verzweigte Alkylgruppen mit 1 bis 4 Kohlenstoffatomen, die durch Methoxy, Äthoxy, Methylthio oder Äthylthio substituiert sein können, bedeuten, *dadurch gekennzeichnet,* daß man Phosgen in Anwesenheit eines unter den Reaktionsbedingungen inerten organischen Lösungs- oder Verdünnungsmittels mit Salzen von O,S-Dialkyldithiophosphorsäureestern der Formel II

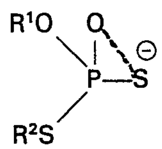 $M^{\oplus}$ II

in der $R^1$ und $R^2$ die oben genannte Bedeutungen haben und $M^{\oplus}$ für ein Alkalimetallion oder ein gegebenenfalls durch Alkylreste mit 1 bis 3 Kohlenstoffatomen substituiertes Ammoniumion steht, umsetzt.

2. Verfahren nach Anspruch 1, *dadurch gekennzeichnet,* daß man die Umsetzung in Gegenwart eines Überschusses an Phosgen durch führt.

3. Verfahren nach Anspruch 1, *dadurch gekennzeichnet,* daß man die Umsetzung bei einer Temperatur im Bereich von −40 bis + 60°C durchführt.

4. Verfahren nach Anspruch 1, *dadurch gekennzeichnet,* daß man die Umsetzung in Gegenwart eines phosgenaktivierenden Katalysators durch führt.

**Revendications**

1. Procédé de préparation de chlorures d'acides O,S-dialkylthiophosphoriques de formule I

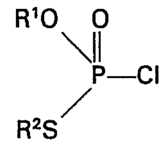 I

dans laquelle $R^1$ et $R^2$ désignent des groupes alkyle en $C_1$ à $C_4$ identiques ou différents, ramifiés ou non, pouvant être substitués par des groupes méthoxy, éthoxy, méthylthio ou éthylthio, caractérisé par le fait qu'on fait réagir du phosgène, en présence d'un solvant ou d'un diluant organiques inertes dans les conditions de la réaction, avec des sels d'esters d'acides O,S-dialkyldithiophosphoriques de formule II

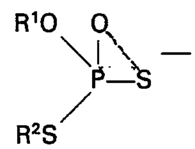 $M^{\oplus}$ II

dans laquelle $R^1$ et $R^2$ ont les significations indiquées ci-dessus, $M^{\oplus}$ représentant un ion d'un métal alcalin ou un ion ammonium substitué le cas échéant par des restes alkyle comportant 1 à 3 atomes de carbone.

2. Procédé selon la revendication 1, dans lequel on effectue la réaction en présence d'un excès de phosgène.

3. Procédé selon la revendication 1, dans lequel on effectue la réaction à une température comprise entre −40 et +60°C.

4. Procédé selon la revendication 1, dans lequel on effectue la réaction en présence d'un catalyseur activant le phosgène.

**Claims**

1. A process for the manufacture of an O,S-dialkylthiophosphoric acid chloride of the formula I

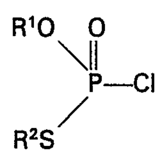 I

where $R^1$ and $R^2$ are identical or different and denote linear or branched alkyl of 1 to 4 carbon atoms which may or may not be substituted by methoxy, ethoxy, methylthio or ethylthio, wherein phosgene is reacted with a salt of an O,S-dialkyldithiophosphoric acid ester of the formula II

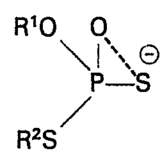 $M^{\oplus}$ II

where $R^1$ and $R^2$ have the above meanings and $M^{\oplus}$ denotes an alkali metal cation or an ammonium ion optionally substituted by alkyl of 1 to 3 carbon atoms, in the presence of an organic solvent or diluent inert under the reaction conditions.

2. A process as claimed in claim 1, wherein the reaction is carried out in the presence of an excess of phosgene.

3. A process as claimed in claim 1, wherein the reaction is carried out at from −40° to +60°C.

4. A process as claimed in claim 1, wherein the reaction is carried out in the presence of a phosgene-activating catalyst.